# EUROPEAN PATENT SPECIFICATION

(11) **EP 1 049 096 B1**
(45) Date of publication and mention of the grant of the patent: **04.07.2012**
(21) Application number: 00107513.4
(22) Date of filing: 07.04.2000
(51) Int. Cl.: G11B 27/10, G11B 27/30, G11B 19/02

(54) **Method and apparatus for controlling presentation of digital video data**
Verfahren und Gerät zur Regelung der Anzeige von digitalen Videodaten
Méthode et appareil servant à commander la présentation de données vidéo

(30) Priority: 29.04.1999 US 131815 P; 30.06.1999 US 343765
(43) Date of publication of application: 02.11.2000
(73) Proprietor: Thomson Licensing, 92130 Issy-les-Moulineaux (FR)
(72) Inventor: Lampe, Mark J., Carmel IN 46032 (US); Rich, Michael D., Fishers, IN 46038 (US)
(74) Representative: Rumpler, Wolfgang

(56) References cited:
- EP-A1- 0 788 106
- US-A- 5 864 682

## Description

This application claims the benefit of U.S. Provisional Application 60/131,815, filed April 29, 1999.

### BACKGROUND OF THE INVENTION

### 1. Field of the Invention.

The present invention relates to a method and an apparatus for controlling presentation of a video program based on a digital data stream, and in particular, a method and an apparatus for allowing a user to easily replay a predetermined portion of the program preceding a current presentation point and call up program related on screen displays during the replay interval.

### 2. Related Art.

Video signal processing systems that utilize storage media having digitally compressed video and audio information recorded thereon can give the user a vast number of options for controlling presentation of a program, or a video title, stored on such a media. One such system that is gaining rapid popularity comprises a video disc player adapted to process information stored in accordance with the digital video disc (DVD) specification. The information on a DVD formatted disc is recorded as discrete packets of data, in accordance with a video and audio data compression standard, wherein designated packets carry data associated with various data streams, such as alternative video angles, audio tracks, sub-picture streams, etc. A video disc player reading a DVD formatted disc may be controlled to display or present certain packets of data and skip over others. Using this capability, the DVD system can allow the disc author to provide multiple variations of a video title, as well as various on screen displays, to suit the preferences of the viewer.

Often, viewers want to replay a predetermined portion of a program during the course of a particular viewing. This may occur when the viewer wants to replay a brief portion of the program that the viewer may have missed, or particularly enjoyed, during regular playback. Also, if a particular scene includes loud music and sound effects that tend to drown out dialogue, viewers may wish to playback only that scene to try to rehear to the portions of the dialogue that they missed.

The viewer usually has a number of options to replay a portion of the program during normal playback. The viewer may jump back to the beginning of a predefined program block, such as a chapter on a DVD. The viewer may playback the program at a faster speed, either in forward or reverse mode, until the desired point in the program is found, and then resume playback at normal speed. The viewer may set a repeat mode to repeat the playback of a predefined program block or a viewer defined program block by setting A-B points on the disc.

Document EP 0 788 106 A1 discloses a multimedia optical disc including a lot of blocks, each of which stores moving picture data, audio data and sub-picture data and control information. Each piece of moving picture data, audio data, sub-picture data and control information in the same block has the same reproduction time limit. Each piece of control information includes a table which stores a skip address for skip reproduction for each different skip amount.

However, these methods usually require multiple keypresses and are inconvenient when the viewer wishes to replay only a short interval of the program that immediately precedes the current presentation point. If the viewer wants to better perceive the missed conversation, the viewer may manually switch ON the subtitles, while searching for the desired jump point, and switch OFF the subtitles after the replay is completed. However, this adds more keypresses to the sequence, and the viewer must manually coordinate the switching ON and OFF of the subtitles with the search and presentation, which may be difficult and annoying. Thus, the multiple keypresses and inconveniences tend to interrupt the flow of the program and reduce the viewer's enjoyment of the program.

Therefore, what is needed is a method and an apparatus for allowing a viewer to easily replay a predetermined portion of a program that immediately precedes the current presentation point.

What is also needed is a method and an apparatus for allowing a viewer to easily replay a predetermined portion of a program that immediately precedes the current presentation point in a manner which allows the viewer to view selected on screen displays (OSDs) associated with the replay interval.

### SUMMARY OF THE INVENTION

According to the invention there is provided a method as defined in claim 1 and a digital video system as defined in claim 2.

The present invention allows a viewer to easily replay a predetermined portion of the program preceding a current presentation point in response to a user input. The present invention also provides onscreen displays for subtitles, in accordance with viewer selected preferences, during the replay interval.

### BRIEF DESCRIPTION OF THE DRAWINGS

The invention will be described with reference to the accompanying drawings, wherein:
Fig. 1 is a block diagram of a digital video disc player suitable for implementing the replay feature of the present invention;
Fig. 2 is a diagram of a data structure in accordance with the DVD format and suitable for implementing the replay feature of the present invention;
Fig. 3 is a block diagram of a presentation structure in accordance with the DVD format and suitable for implementing the replay feature of the present invention; and
Fig. 4 is a flowchart illustrating the steps for implementing the replay feature of the present invention.

### DETAILED DESCRIPTION

Although the exemplary embodiment is described with reference to a digital video apparatus adapted to read compressed program data comprising video, audio and control data from a disc and to process the program data in accordance with the DVD specification, it is to be understood that the present invention may be used in any video processing apparatus capable of processing digital video and audio information, wherein program related information included with the video and audio information can be used to selectively present portions of the video and audio information, and each program data unit has associated with it presentation time data.

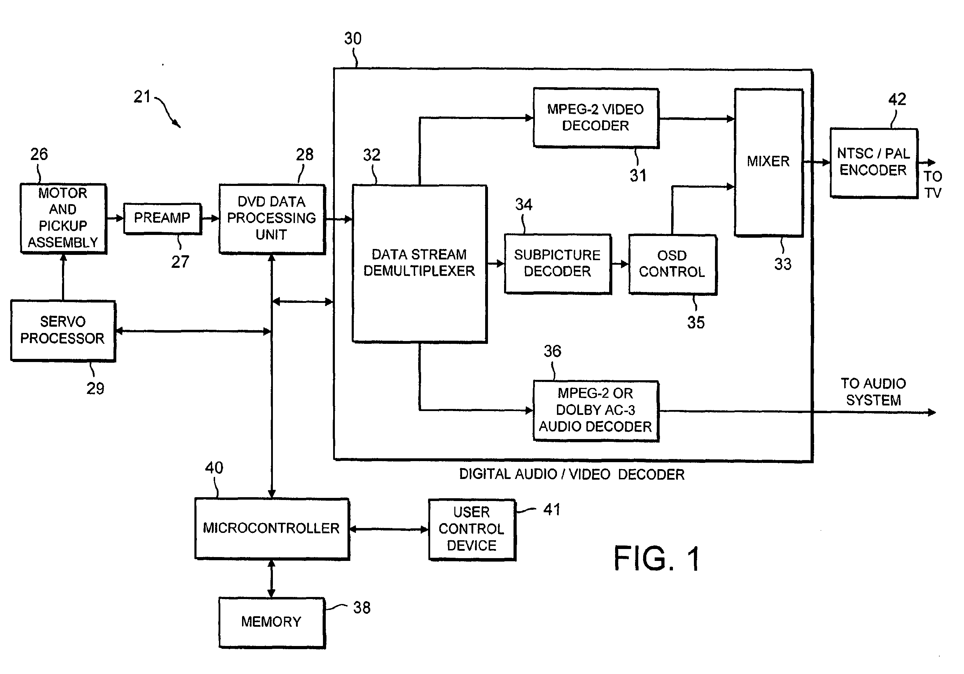

Fig. 1 is a block diagram showing the basic elements of exemplary digital video disc player 24 suitable for controlling the presentation of digital program data in accordance with the present invention. The construction and operation of these elements are generally known and will not be discussed in detail here. Disc player 24 comprises motor and pickup assembly 26 that spins a disc and reads the information stored thereon under the control of servo processor 29. Preamp 27 and DVD data processing unit 28 translate the electrical pulses from motor and pickup assembly 26 into digital data that can be further processed by digital audio/video decoder unit 30. DVD data processing unit 28 typically performs functions such as demodulation, error correction and descrambling of the raw data read from the disc to provide digitally encoded data in a suitable format for decoder unit 30.

Decoder unit 30 receives the digitally encoded data, processes the data, and provides the appropriate video and audio signals to a display unit, such as a television set. Decoder unit 30 comprises data stream de-multiplexer 32 which demultiplexes the data from data processing unit 28 into a plurality of separate data streams, including, for example, a video stream, an audio stream and a sub-picture stream, and provides the data streams to their respective data decoders. Video decoder 31 receives the video stream, decodes the signal in accordance with the MPEG-2 standard and provides a video signal to mixer 33. Sub-picture decoder 34 receives the sub-picture stream and provides data to on screen display (OSD) control 35 which provides OSD video signals to mixer 33. The combined video signal from mixer 33 is provided to NTSC/PAL encoder 42 which provides a video signal that conforms to the appropriate video signal standard to a video display device. Audio decoder 36 receives the audio streams from data stream demultiplexer 32 and provide the appropriate audio signals to an audio system.

Microcontroller 40 controls the operation of disc player 24. Microcontroller 40 is coupled to user control device 41, which may comprise IR remote control devices, front panel buttons or the like. Microcontroller 40 translates data from user control device 41 to control the operation of the various elements of disc player 24 described above. Various parameters and data for presenting the data stream may be stored in memory 38. Microcontroller 40 may be embodied in various forms, including, but not limited to, a dedicated integrated circuit, or a part of a decoder/controller unit. Microcontroller 40 may be comprised of one of a plurality of suitable controller units, including, but not limited to STI 5500, manufactured by SGS Thomson.

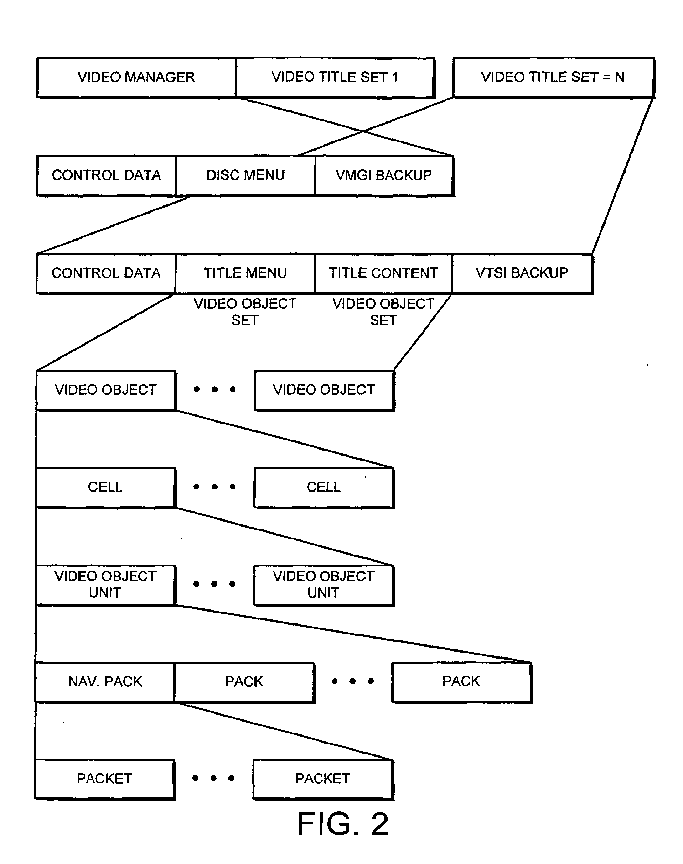

Fig. 2 illustrates the structure of the program data and control data stored on a disc in accordance with the DVD specification and suitable for presentation by disc player 24. The data structure is hierarchical, wherein each data block is divided up into component data blocks, which are further divided into smaller component data blocks. Each video title set, which corresponds to a designated program unit, for example, a movie or an episode of a television show, is comprised of video object sets, which comprises a plurality of video objects.

Each video object is comprised of a plurality of cells, each of which may be considered a presentation data unit having a plurality of program data types, such as video, audio, subpicture, etc., and corresponding to a program segment. Each cell is in turn comprised of a plurality of video object units (VOBUs). Each VOBU is comprised of a navigation pack (NAV_PACK) and a plurality of packs, which are subdivided into a plurality of packets. A VOBU generally corresponds to an MPEG-2 Group of Pictures (GOP), and the NAV_PACK includes the control data associated with the VOBU. Each NAV_PACK contains information such as sector addresses of VOBUs relative to the current one (both forwards and backwards in temporal presentation order), and the amount of elapsed time in cell presentation which corresponds to the current VOBU.

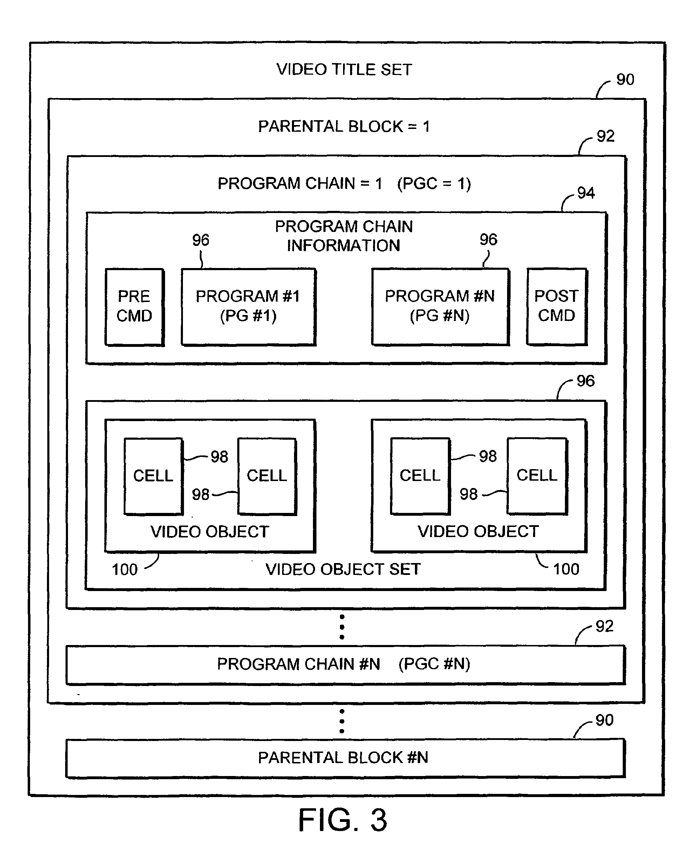

Data stored in accordance with the DVD specification is also logically organized into a presentation structure in order to provide flexibility in the manner in which the data can be presented. Fig. 3 illustrates the presentation structure in accordance with the DVD specification and suitable for use with disc player 24. This presentation structure is overlaid onto the data structure of Fig. 2. At the base level, the presentation sequence is defined by programs (PGs) 96, each of which comprise a linked list of pointers to cells. A plurality of PGs 96 may be combined to form a program chain information (PGCI) 94, a plurality of which may in turn be combined to form program chain (PGC) 92.

During presentation, disc player 24 retrieves the appropriate cells from the disc in accordance with a PGC, demultiplexes the data in the cells and prepares the data for presentation. In this connection, the NAV_PACKs are parsed and addresses of the NAV_PACK may be saved for use at a later time. Since each NAV_PACK has associated with it an elapsed time value, a NAV_PACK can be used to resume presentation at a specific elapsed time after stopping, or it can be used for time-edit features. In the present invention, microcontroller 40 converts the relative elapsed time data in each NAV_PACK to an absolute elapsed time value and stores the NAV_PACK address in memory 38, or any other appropriate memory device. Thereafter, a particular NAV_PACK address associated with a particular elapsed time value may be easily and quickly accessed when the user requests a replay.

In accordance with the present invention, when the user requests a replay, microcontroller 40 evaluates the current presentation time, determines the desired replay start time, determines the desired NAV_PACK address associated with the desired replay start time based on the elapsed time data stored in memory 38, and resumes presentation from the desired replay start time based on the desired NAV_PACK. The address of the NAV_PACK, as stored, is used as a place to resume playback from. It may be thought of as the start sector to begin demultiplexing content and presenting the content. The end sector is still the final sector in the cell. Thus, presentation is resumed at a prior point, with the delimiters of presentation being the NAV_PACK address of interest, and the end address of the cell which contains that VOBU.

According to the DVD format, a NAV_PACK is parsed about every .4 - .6 seconds of presentation material. This means that the effective sampling rate is sufficient to allow jump-backs on a 1 second presentation time boundary. Using the saved NAV_PACK addresses, disc player 24 may jump back a predetermine time period preceding the current presentation time. The NAV_PACK addresses are indexed by their elapsed time information so that when a user wishes to jump backward a predetermined number of seconds, it is easy to retrieve the desired NAV_PACK.

Advantageously, the NAV_PACK addresses may be stored in a circular memory in order to facilitate selection of the desired NAV_PACK and reduce memory requirements. The circular memory may be formed as part of microcontroller 40 or memory 38, for example. Also, NAV_PACK addresses may be stored to be retrievable at predetermined intervals, thereby allowing the user to jump back in multiples of a predetermined time interval. For example, a single press of a replay button may be arranged to cause disc player 24 to replay the previous 5 seconds, while two presses of the replay button causes disc player 24 to replay the previous 10 seconds, etc. Alternatively, the replay interval associated with each button press may be arranged to be user selectable. The replay request and the selection of replay interval may be input by the user using any one of the user interface methods known, for example, by using a remote control device and/or an onscreen display.

Since storing all of the NAV_PACK addresses for an entire title may be very memory intensive, the NAV_PACK addresses for only a predetermined amount of time in the past are saved in memory 38. If the user wishes to jump back for a time period that exceeds the time period saved, a time-search algorithm may be used to determine the desired presentation time, and the NAV_PACK addresses associated with the desired presentation time. Such an algorithm may employ the TIME MAP table that is included in a disc for any title which is of type One_Sequential_PGC. The time map table includes sector addresses for NAV_PACKs that begin at distinct time intervals. The time granularity of these intervals may vary (and may be more than 1 second resolution). Thus, the algorithm may jump to the NAV_PACK that starts closest to the time being searched, and then search forward in the stream until the NAV_PACK that has the presentation material starting at the exact second being searched is found.

Once the desired presentation time has been determined and the NAV_PACK associated with the desired presentation time has been accessed, program presentation resumes. As noted above, viewers may wish to replay a portion of the program to rehear dialogue that they may have missed. In this regard, microcontroller 40 automatically turns ON the subtitles, in accordance with user set language preference, when presentation resumes at the desired presentation time. Alternatively, the selected subtitle may correspond to the last used subtitle language or a default language, or the subtitles may be turned OFF altogether according to the user set preference. When presentation reaches the presentation time corresponding to the time the replay request was received, microcontroller 40 automatically turns off the subtitle. By viewing the subtitle display, the viewer is able to easily perceive any dialogue that may be difficult to follow or hear due to background noise. In this manner, disc player 24 replays a predetermined portion of the program and provides subtitles during the replay interval, in response to a single user input, thereby relieving the user of the inconveniences noted above.

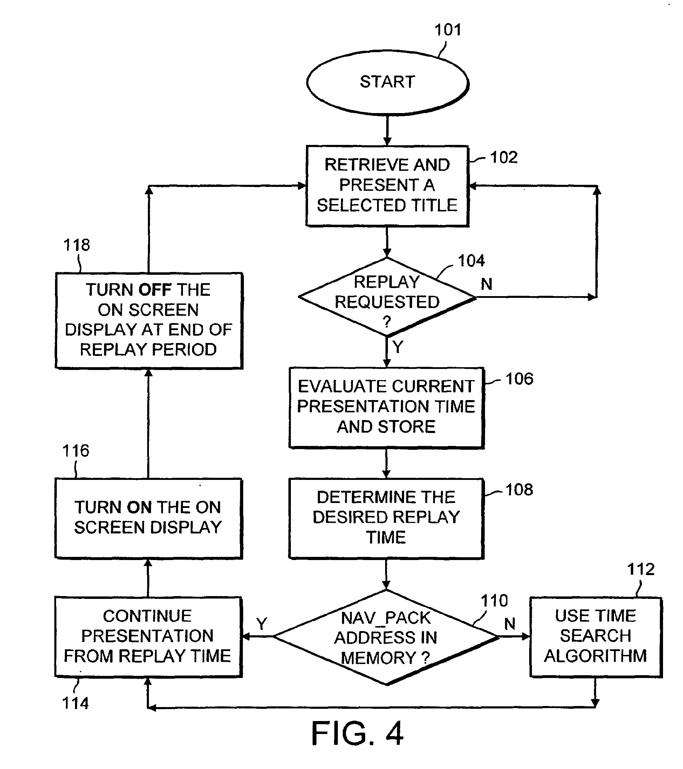

Fig. 4 illustrates a flowchart for implementing the instant replay feature in accordance with the present invention. Under normal presentation conditions, disc player 24 retrieves the program data from a disc and presents a selected title in accordance with a prescribed sequence as indicated in step 102. As noted above, disc player 24 parses the NAV_PACKs during presentation and for every NAV_PACK encountered in the stream, converts the NAV_PACK relative elapsed time value into an absolute elapsed time value and stores the NAV_PACK address in a circular buffer, overwriting the oldest kept value.

In step 104, disc player 24 determines whether a viewer input requesting instant replay has been received. If not, disc player 24 continues normal presentation as indicated in step 102. If an instant replay request is received, disc player 24 evaluates the current elapsed presentation time, and stores that current elapsed presentation time, in step 106 and subtracts the desired number of seconds from the current elapsed presentation time in step 108 to determine the desired presentation time. If a NAV_PACK address for the desired presentation time is stored in memory 38, as determined in step 110, disc player 24 accesses that NAV_PACK and resumes presentation beginning from that NAV_PACK. If the desired NAV_PACK address has not been stored, thereby indicating that the user wishes to jump back a relatively large period of time, a time-search algorithm is used to determine the desired presentation time and NAV_PACK address, as indicated by step 112.

Once the desired NAV_PACK address is found, presentation resumes based on the desired NAV_PACK, as indicated in step 114, and subtitles are automatically turned ON, as indicated in step 116. The subtitles may be turned ON in accordance with user set preferences or may be turned ON in accordance with the last subtitles used. Presentation with subtitle continues until presentation reaches the original presentation time when the instant replay request was detected at step 104. At that point, the subtitles are turned OFF, as indicated in step 118, and presentation continues in the normal manner, as indicated in step 102.

It will be apparent to those skilled in the art that although the present invention has been described in terms of an exemplary embodiment, modifications and changes may be made to the disclosed embodiment without departing from the essence of the invention. Also, any conventionally known methods suitable for storing and accessing data addresses in view of their associated presentation time data may be used. Also, memory 38 may be formed as part of microcontroller 40 rather than as a separate device.

It is herein recognized that the present instant replay feature may be implemented using any one of a number of conventionally known methods, or combination of methods, for controlling the various elements of disc player 24 described above, for example by using embedded software in a microcontroller 40. Also, the present instant replay feature may be implemented for any signal processing system which can be configured to selectively display programs while providing means to store the current elapsed presentation time and addresses of previously presented program portions.

## Claims

1. A method for controlling presentation of digital presentation data units including video data, comprising the steps of:
retrieving program data including a sequence of digital presentation data units and further data units, each presentation data unit corresponding to a predetermined program segment and having time information associated therewith, and each of the further data units associated to a presentation data unit and comprising information on time elapsing when presenting the associated presentation data unit, such serving to provide, when the further data units are parsed, information on absolute time elapsed;
presenting (102) the retrieved sequence of presentation data units in response to a user entered play request;
detecting (104) a user entered replay request at a current presentation time;
determining (108) a replay start time by use of the further data units when parsed, and restarting (114) presentation of the presentation data units from the replay start time in response to the user entered replay request; wherein
said presentation data units, the presentation of which is restarted, include a predetermined portion of said program data immediately preceding said current presentation time;
**characterized by**
turning on (116) a subtitle display in response to the user entered replay request when restarting presentation of the presentation data units from the replay start time, and
providing said subtitle display during a replaying of the presentation data units.

2. A digital video system, comprising:
means for retrieving program data including a sequence of digital presentation data units and further data units, each presentation data unit corresponding to a predetermined program segment and having time information associated therewith, and each of the further data units associated to a presentation data unit and comprising information on time elapsing when presenting the associated presentation data unit, such serving to provide, when the further data units are parsed, information on absolute time elapsed;
means for presenting (102) the retrieved sequence of presentation data units in response to a user entered play request;
means for detecting (104) a user entered replay request at a current presentation time;
means for determining (108) a replay start time by use of the further data units when parsed, and for restarting (114) presentation of the presentation data units from the replay start time in response to the user entered replay request; wherein
said presentation data units, the presentation of which is to be restarted, include a predetermined portion of said program data immediately preceding said current presentation time;
**characterized by**
means for turning on (116) a subtitle display in response to the user entered replay request when restarting presentation of the presentation data units from the replay start time, and for providing said subtitle display during a replaying of the presentation data units.

3. The system according to claim 2, **characterized in that** said means for determining (108) and for restarting (114) is capable of parsing (106) the presentation data units and the further data units during presentation, and storing address data associated with the control data units in a circular buffer of the system.

## Patentansprüche

1. Verfahren zum Steuern der Darstellung der digitalen Darstellung von Dateneinheiten, die Videodaten enthalten, wobei das Verfahren die folgenden Schritte umfasst:
Abrufen von Programmdaten, die eine Folge von Digitaldarstellungs-Dateneinheiten und weiteren Dateneinheiten enthalten, wobei jede Darstellungsdateneinheit einem vorgegebenen Programmsegment entspricht und ihr Zeitinformationen zugeordnet sind, und wobei jede der weiteren Dateneinheiten einer Darstellungsdateneinheit zugeordnet ist und sie Informationen über die Zeit umfasst, die bei der Darstellung der zugeordneten Darstellungsdateneinheit verstreicht, was dazu dient, Informationen über die verstrichene absolut Zeit zu liefern, wenn die weiteren Dateneinheiten geparst werden;
Darstellen (102) der abgerufenen Folge von Darstellungsdateneinheiten in Reaktion darauf, dass ein Anwender eine Abspielanforderung eingegeben hat;
Detektieren (104), dass ein Anwender zu einer gegenwärtigen Darstellungszeit eine Wiedergabeanforderung eingegeben hat;
Bestimmen (108) einer Wiedergabestartzeit unter Verwendung der weiteren Dateneinheiten, wenn sie geparst werden, und Neustarten (114) der Darstellung der Darstellungsdateneinheiten von der Wiedergabestartzeit in Reaktion darauf, dass der Anwender eine Wiedergabeanforderung eingegeben hat;
wobei die Darstellungsdateneinheiten, deren Darstellung neu gestartet wird, einen vorgegebenen Abschnitt der Programmdaten enthalten, der der gegenwärtigen Darstellungszeit unmittelbar vorausgeht;
**gekennzeichnet durch**
Einschalten (116) einer Untertitelanzeige in Reaktion auf die vom Anwender eingegebene Wiedergabeanforderung beim Neustarten der Darstellung der Darstellungsdateneinheiten von der Wiedergabestartzeit, und
Liefern der Untertitelanzeige während einer Wiedergabe der Darstellungsdateneinheiten.

2. Digitales Videosystem, das umfasst:
Mittel zum Abrufen von Programmdaten, die eine Folge von Digitaldarstellungs-Dateneinheiten und weiteren Dateneinheiten enthalten, wobei jede Darstellungsdateneinheit einem vorgegebenen Programmsegment entspricht und ihr Zeitinformationen zugeordnet sind, und wobei jede der weiteren Dateneinheiten einer Darstellungsdateneinheit zugeordnet ist und sie Informationen über die Zeit umfasst, die bei der Darstellung der zugeordneten Darstellungsdateneinheit verstreicht, was dazu dient, Informationen über die verstrichene absolut Zeit zu liefern,
wenn die weiteren Dateneinheiten geparst werden;
Mittel zum Darstellen (102) der abgerufenen Folge von Darstellungsdateneinheiten in Reaktion darauf, dass ein Anwender eine Abspielanforderung eingegeben hat;
Mittel zum Detektieren (104), dass ein Anwender zu einer gegenwärtigen Darstellungszeit eine Wiedergabeanforderung eingegeben hat;
Mittel zum Bestimmen (108) einer Wiedergabestartzeit unter Verwendung der weiteren Dateneinheiten, wenn sie geparst werden, und zum Neustarten (114) der Darstellung der Darstellungsdateneinheiten von der Wiedergabestartzeit in Reaktion darauf, dass der Anwender eine Wiedergabeanforderung eingegeben hat;
wobei die Darstellungsdateneinheiten, deren Darstellung neu gestartet werden soll, einen vorgegebenen Abschnitt der Programmdaten enthalten, der der gegenwärtigen Darstellungszeit unmittelbar vorausgeht;
**gekennzeichnet durch**
Mittel zum Einschalten (116) einer Untertitelanzeige in Reaktion auf die vom Anwender eingegebene Wiedergabeanforderung beim Neustarten der Darstellung der Darstellungsdateneinheiten von der Wiedergabestartzeit und zum Liefern der Untertitelanzeige während einer Wiedergabe der Darstellungsdateneinheiten.

3. System nach Anspruch 2, **dadurch gekennzeichnet, dass** die Mittel zum Bestimmen (108) und zum Neustarten (114) die Darstellungsdateneinheiten und die weiteren Dateneinheiten während der Darstellung parsen (106) und Adressendaten, die den Steuerdateneinheiten zugeordnet sind, in einem Ringpuffer des Systems speichern können.

## Revendications

1. Procédé de commande de la présentation de modules de données de présentation numériques incluant des données vidéo, comprenant les étapes consistant à :
récupérer des données de programme incluant une séquence de modules de données de présentation numériques et d'autres modules de données, chaque module de données de présentation correspondant à un segment de programme prédéterminé et ayant des informations temporelles associées à celui-ci, et chacun des autres modules de données étant associé à un module de données de présentation et comprenant des informations sur le temps s'écoulant lors de la présentation du module de données de présentation associé, servant de ce fait à fournir des informations sur le temps absolu écoulé lorsque les autres modules de données sont analysés ;
présenter (102) la séquence récupérée de modules de données de présentation en réponse à une requête de lecture saisie par l'utilisateur ;
détecter (104) une requête de retransmission différée saisie par l'utilisateur à une heure de présentation actuelle ;
déterminer (108) une heure de démarrage de retransmission différée en utilisant les autres modules de données lors de l'analyse, et redémarrer (114) la présentation des modules de données de présentation à partir de l'heure de démarrage de retransmission différée en réponse à la requête de retransmission différée saisie par l'utilisateur ; dans lequel
lesdits modules de données de présentation dont la présentation est redémarrée incluent une portion prédéterminée desdites données de programme précédant immédiatement ladite heure de présentation actuelle ;
**caractérisé par**
l'allumage (116) d'un affichage de sous-titres en réponse à la requête de retransmission différée saisie par l'utilisateur lors du redémarrage de la présentation des modules de données de présentation à partir de l'heure de démarrage de retransmission différée, et
la fourniture dudit affichage de sous-titres au cours d'une retransmission différée des modules de données de présentation.

2. Système de vidéo numérique comprenant :
un moyen pour récupérer des données de programme incluant une séquence de modules de données de présentation numériques et d'autres modules de données, chaque module de données de présentation correspondant à un segment de programme prédéterminé et ayant des informations temporelles associées à celui-ci, et chacun des autres modules de données étant associé à un module de données de présentation et comprenant des informations sur le temps s'écoulant lors de la présentation du module de données de présentation associé, servant de ce fait à fournir des informations sur le temps absolu écoulé lorsque les autres modules de données sont analysés ;
un moyen pour présenter (102) la séquence récupérée de modules de données de présentation en réponse à une requête de lecture saisie par l'utilisateur ;
un moyen pour détecter (104) une requête de retransmission différée saisie par l'utilisateur à une heure de présentation actuelle ;
un moyen pour déterminer (108) une heure de démarrage de retransmission différée en utilisant les autres modules de données lors de l'analyse, et pour redémarrer (114) la présentation des modules de données de présentation à partir de l'heure de démarrage de retransmission différée en réponse à la requête de retransmission différée saisie par l'utilisateur ; dans lequel
lesdits modules de données de présentation dont la présentation doit être redémarrée incluent une portion prédéterminée desdites données de programme précédant immédiatement ladite heure de présentation actuelle ;
**caractérisé par**
un moyen pour allumer (116) un affichage de sous-titres en réponse à la requête de retransmission différée saisie par l'utilisateur lors du redémarrage de la présentation des modules de données de présentation à partir de l'heure de démarrage de retransmission différée, et pour fournir ledit affichage de sous-titres au cours d'une retransmission différée des modules de données de présentation.

3. Système selon la revendication 2, **caractérisé en ce que** ledit moyen pour déterminer (108) et pour redémarrer (114) est capable d'analyser (106) les modules de données de présentation et les autres modules de données au cours de la présentation, et de stocker des données d'adresse associées aux modules de données de commande dans un tampon circulaire du système.
